# EUROPÄISCHE PATENTSCHRIFT

(11) **EP 2 359 432 B1**
(45) Veröffentlichungstag und Bekanntmachung des Hinweises auf die Patenterteilung: **01.08.2018**
(21) Anmeldenummer: 09782956.8
(22) Anmeldetag: 14.09.2009
(51) Int. Cl.: H01M 10/052, H01M 2/12, H01M 10/625, H01M 10/615, H01M 10/6563, H01M 10/6556, H01M 10/613, H01M 10/48

(54) **BATTERIEMODUL**
BATTERY MODULE
MODULE DE BATTERIE

(30) Priorität: 17.11.2008 DE 102008043789
(43) Veröffentlichungstag der Anmeldung: 24.08.2011
(73) Patentinhaber: Robert Bosch GmbH, 70442 Stuttgart (DE)
(72) Erfinder: ALKEMADE, Ulrich, 71229 Leonberg (DE); SAUTER, Ulrich, 76131 Karlsruhe (DE)
(86) Internationale Anmeldenummer: PCT/EP2009/061853
(87) Internationale Veröffentlichungsnummer: WO 2010/054877

(56) Entgegenhaltungen:
- WO-A-2008/120054
- DE-A1- 10 352 266
- JP-A- 2000 059 917
- US-A- 5 534 364
- US-A1- 2005 269 995
- US-B1- 6 372 378

## Beschreibung

Die vorliegende Erfindung betrifft ein Batteriemodul gemäß dem Oberbegriff des Anspruches 1, ein Batteriemodulsystem gemäß dem Oberbegriff des Anspruches 11 und ein Verfahren gemäß dem Oberbegriff des Anspruches 12.

### Stand der Technik

In Batterien, z. B. Lithium-Ionen-Batterien, die im Allgemeinen in Batteriemodulen angeordnet sind, können Störungen auftreten. Störungen in Batterien haben vielfältige Ursachen die häufig eine Folge fehlerhaft ablaufender elektrochemischer Reaktionen in den Batterien sind. Lithiumionen-Batterien beinhalten Oxidationsmittel, z. B. LiCoO₂ und oxidierbare Materialien, z. B. Ethylencarbonat. Diese Materialien sind durch eine dünne Polymermembran voneinander getrennt, die einer maximalen Temperatur von 180° C standhält. Bei höheren Temperaturen als 180°C, bedingt durch eine Störung oder ein Über- bzw. Unterladen der Batterie, gelangen das Oxidationsmittel und die oxidierbaren Materialien aneinander und reagieren exotherm miteinander, so dass sich die Temperatur der Batterie weiter erhöht.

Batterien mit einer Störung können im Allgemeinen weniger oder keinen elektrischen Strom mehr abgeben oder aufnehmen bzw. speichern. Ferner ist störungsbedingt im Allgemeinen der elektrische Innenwiderstand der Batterien erhöht und/oder die Pole der Batterie kehren sich um. Das Ergebnis der Störung ist oft eine Zerstörung der Batterie mit exothermen Vorgängen, so dass es zu einer starken Wärmeentwicklung und einer Entstehung von Gasen oder Dämpfen kommt, die aus der Batterie austreten können. Batterien weisen hierfür normalerweise Überdruckventile auf, die die Gase oder Dämpfe ab einem bestimmten Druck aus der Batterie ableiteten. Die von der Batterie mit Störung ausgehenden thermischen und gegebenenfalls chemischen Emissionen können andere Batterien einen Schaden zufügen und diese auch zerstören, so dass es zu einer zerstörenden Kettenreaktion zwischen den Batterien kommen kann. Die entstehenden Gase und Dämpfe sind teilweise sehr giftig, so dass diese Menschen schaden können.

Es sind Schmelzelemente bekannt, die ab einer bestimmten Temperatur der Batterie die Batterie von den elektrischen Stromleitungen trennt. Die Schmelzelemente basieren auf dem physikalischen Vorgang des Schmelzens eines Metalls ab der Schmelztemperatur des Metalls. Trotz eines elektrischen Abschaltens der Batterie können aus der Batterie giftige Gase und Dämpfe austreten, welche bei der Umwelt zu erheblichen Schäden führen können. Beispielsweise können Menschen dadurch gesundheitlichen Schaden erleiden.

Die US 2005/269995 A1 offenbart ein Batteriemodul mit Gebläsen, welche bei Überhitzung oder Feuer durch Klappen verschlossen werden.

Die WO 2008/120054 A2 offenbart ein Batteriemodul mit einem Gassensor, wobei basierend auf dem Sensorsignal bei Detektion eines Gases ein Abführmechanismus angesteuert wird, um das detektierte Gas entweichen zu lassen.

US5534364 offenbart ein Gassensor als Überwachungsmittel zur Erfassung des Zustandes einer Batterie in einem Batteriemodul.

### Offenbarung der Erfindung

### Vorteile der Erfindung

Ein erfindungsgemäßes Batteriemodul, insbesondere für ein Kraftfahrzeug, umfasst ein Gehäuse, wenigstens eine in dem Gehäuse angeordnete Batterie, wenigstens eine Einlassöffnung zum Einleiten eines Temperierfluids in das Gehäuse, wenigstens eine Auslassöffnung zum Ausleiten des Temperierfluids aus dem Gehäuse, wenigstens ein Überwachungsmittel zur Erfassung eines Zustandes der wenigstens einen Batterie, wobei die wenigstens eine Einlassöffnung und/oder die wenigstens eine Auslassöffnung von wenigstens einem Verschlussmittel bei einem von dem wenigstens einen Überwachungsmittel erfassten Störungszustand der wenigstens einen Batterie verschließbar ist, so dass aus der wenigstens einen Batterie mit dem Störungszustand austretenden Stoffe, insbesondere Gase, nicht aus dem Batteriemodul austreten können, wobei dadurch gekennzeichnet, dass das wenigstens eine Überwachungsmittel einen Sensor zur Erkennung von Gasen umfasst, der eingerichtet ist, ab wenigstens eines vorgegebenen Gases eine Störungszustand zu erkennen. Es kann bereits wenigstens ein Verschlussmittel nur an wenigstens einer Einlassöffnung oder nur an wenigstens einer Auslassöffnung genügen, um die wenigstens eine Batterie bei einem Störmungszustand fluiddicht in dem Gehäuse einzuschließen, sofern beispielsweise an der wenigstens einen Einlassöffnung oder an der wenigstens einen Auslassöffnung ein entsprechender Gegendruck vorhanden ist, so dass das Temperierfluid auch ohne Verschlussmittel nicht ausströmen kann.

Das Temperierfluid dient zum Kühlen und/oder Erwärmen der wenigstens einen Batterie.

In einer weiteren Ausgestaltung umfasst das wenigstens eine Überwachungsmittel wenigstens ein Sensor zur Erfassung der elektrischen Spannung und/oder der Temperatur der wenigstens einen Batterie. Die elektrische Spannung und/oder die Temperatur wenigstens einer Batterie wird erfasst und ab einer bestimmten, vorgegebenen Temperatur oder elektrischen Spannung wird eine Störung der wenigstens einen Batterie gemeldet oder erkannt. In der Erfindung umfasst das wenigstens eine Überwachungsmittel einen Sensor zur Erkennung von Gasen. Ab wenigstens einer vorgegebenen Konzentration wenigstens eines vorgegebenen Gases wird eine Störung der wenigstens einen Batterie gemeldet oder erkannt.

Zweckmäßig ist der Sensor innerhalb des Gehäuses bzw. des Temperierfluidkanals im Bereich der wenigstens einen Auslassöffnung angeordnet. Das Temperierfluid wird um die Batterien geleitet, um diese zu kühlen und/oder zu erwärmen, so dass aus den Batterien austretende Gase oder Dämpfe mit dem Temperierfluid zu dem Sensor an der Auslassöffnung gelangen. Der Sensor kann auch in dem Innenraum des Gehäuses mit den Batterien angeordnet sein. Ein Temperierfluidkanal kann auch als Bestandteil des Gehäuses angesehen werden.

In einer weiteren Ausgestaltung ist das wenigstens eine Verschlussmittel eine Klappe.

In einer Variante umfasst das Batteriemodul ein Abschaltelement zum Trennen der elektrischen Verbindung der wenigstens einen Batterie von wenigstens einer Stromleitung für die wenigstens eine Batterie bei einer von dem wenigstens einen Überwachungsmittel erfassten Störungszustand der wenigstens einen Batterie. Die wenigstens eine Batterie, vorzugsweise sämtliche Batterien des Batteriemoduls, erwärmen sich somit nicht weiter wegen einer Ent- oder Aufladung.

In einer Ausgestaltung umfasst das Abschaltelement eine pyrotechnische Treibladung. Eine pyrotechnische Treibladung ist preiswert und kann eine sehr schnelle Abschaltung in einer kurzen Zeit, z. B. weniger als 1s, insbesondere weniger als 200 ms, bewirken.

Zweckmäßig umfasst das Abschaltelement einen mechanischen, elektrischen oder elektronischen Schalter.

In einer weiteren Ausführungsform umfasst das Batteriemodul wenigstens einen Entgasungskanal zum Ableiten von aus der wenigstens einen Batterie austretenden Stoffen, insbesondere Gase, mit einem Überwachungsmittel in dem Entgasungskanal und der Entgasungskanal ist von wenigstens einem Zusatzverschlussmittel bei einem Störungszustand der wenigstens einen Batterie verschließbar, so dass aus der wenigstens einen Batterie mit dem Störungszustand austretenden Stoffe, insbesondere Gase, nicht aus dem Batteriemodul austreten können.

In einer ergänzenden Ausgestaltung ist von einem Gebläse das Temperierfluid durch den Innenraum des Gehäuses leitbar.

Vorzugsweis ist die Batterie eine Lithiumionen-Batterie.

Ein erfindungsgemäßes Batteriemodulsystem mit wenigstens einem Batteriemodul umfasst wenigstens ein in dieser Schutzrechtsanmeldung beschriebenes Batteriemodul.

Bei einem erfindungsgemäßen Verfahren zur Verhinderung von Schäden, die von wenigstens einer in einem Gehäuse eines Batteriemoduls angeordneten Batterie verursacht werden und der Zustand der wenigstens einen Batterie von einem Überwachungsmittel erfasst wird, wird bei einem von dem wenigstens einen Überwachungsmittel erfassten Störungszustand der wenigstens einen Batterie die wenigstens eine Batterie fluiddicht in dem Gehäuse eingeschlossen.

In einer Variante wird wenigstens eine Einlassöffnung zum Einleiten eines Temperierfluids in den Innenraum des Gehäuses und wenigstens eine Auslassöffnung zum Ausleiten des Temperierfluids aus dem Innenraum des Gehäuses und vorzugsweise wenigstens ein Entgasungskanal von wenigstens einem Verschlussmittel, z. B. einer Klappe, fluiddicht verschlossen.

In einer weiteren Ausgestaltung wird bei einem von dem wenigsten einen Überwachungsmittel erfassten Störungszustand der wenigstens einen Batterie die wenigstens eine Batterie von wenigstens einer Stromleitung zum Auf- und Entladen der wenigstens einen Batterie abgetrennt.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen stark schematisierten Längsschnitt eines Batteriemoduls in einem normalen Betriebszustand,
- Fig.2: das Batteriemodul gemäß Fig. 2 bei einer Störung,
- Fig. 3: einen stark schematisierte Querschnitt eines Batteriemodulsystems und
- Fig. 4: eine Ansicht eines Kraftfahrzeuges.

### Ausführungsformen der Erfindung

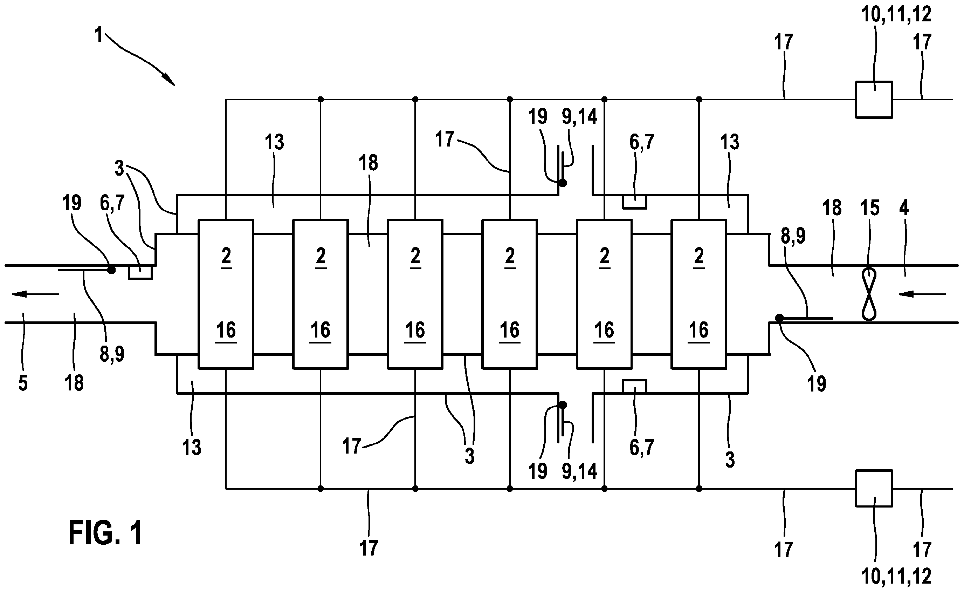

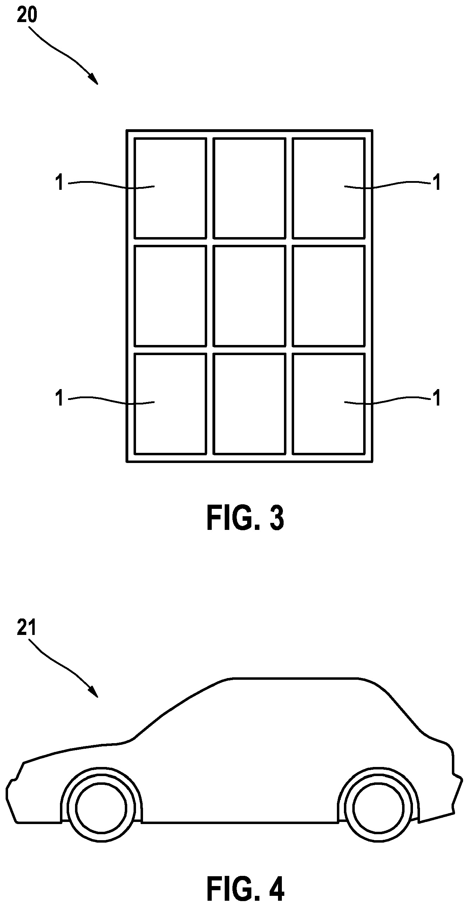

In Fig. 1 ist ein Batteriemodul 1 mit sechs als Lithiumionen-Batterien 16 ausgebildeten Batterien 2 dargestellt. Die Batterien 2 des Batteriemoduls 1 sind in einem Gehäuse 3 angeordnet. In Batteriemodulen 3 sind beispielsweise vier bis zwölf Batterien 2 angeordnet (nicht dargestellt). Mehrere Batteriemodule 3 können auch zu einem Batteriemodulsystem 20 (Fig. 3) kombiniert werden. Batteriemodule 3 dienen z. B. zur Stromversorgung von Kraftfahrzeugen 21, insbesondere Kraftfahrzeuge 21 mit einem Hybridantrieb, Elektrowerkzeugen oder Hubstaplern.

Die Batterien 2 des Batteriemoduls 3 sind mit einer Stromleitung 17 in einer elektrischen Reihenschaltung verbunden. Wahlweise können die Batterien 2 eines Batteriemoduls 1 auch teilweise parallel geschaltet sein. Die Stromleitung 17 leitet den von den Batterien 2 gelieferten elektrischen Strom zum Verbraucher oder lädt die Batterien 2 auf (nicht dargestellt). In den Stromleitungen 17 für die Batterien 2 ist ein Abschaltelement 10 angeordnet, welches ein mechanischer, elektrischer oder elektronischer Schalter 12 oder ein Abschaltelement 10 mit einer pyrotechnischen Treibladung 11 sein kann. Das Abschaltelement 10 kann die Batterien 2 des Batteriemoduls 1 abschalten, d. h. die Batterien 2 werden von der elektrischen Verbindung mittels der Stromleitung 17 getrennt.

Die in dem fluiddichten Gehäuse 3 des Batteriemoduls 1 angeordneten Batterien 2 werden von Luft als Temperierfluid gekühlt und/oder erwärmt. Durch einen Temperierfluidkanal 18 wird mittels eines Gebläses 15 die Luft in den Innenraum des Gehäuses 3 ein- und wieder ausgeleitet. Der Innenraum des Gehäuses 3, in dem die Batterien 2 angeordnet sind, stellt somit auch einen Temperierfluidkanal 18 dar. Dabei strömt die Luft durch eine Einlassöffnung 4 ein und durch eine Auslassöffnung 5 wieder aus. Das Gehäuse 3 ist außerdem mit einen Entgasungskanal 13 versehen. Die Batterien 2 weisen nicht dargestellte Überdruckventile auf, die ab einem bestimmten Druck in den Batterien 2 entstandenen Gase oder Dämpfe in den Entgasungskanal 13 einleiten.

Ein Überwachungsmittel 6 erfasst den Zustand der Batterien 2. Das Überwachungsmittel 6 ist ein Sensor 7, der bestimmte Gase in dem Temperierfluid erkennt, welches durch den Temperierfluidkanal 18 strömen. Hierzu ist der Sensor 7 im Bereich der Auslassöffnung 5 innerhalb des Gehäuses 3 bzw. dem Temperierfluidkanal 18 angeordnet. Außerdem ist auch innerhalb der beiden Entgasungskanäle 13 je ein Sensor 7 vorhanden.

Die Lithiumionen-Batterien 16 beinhalten Oxidationsmittel, z. B. LiCoO₂ und oxidierbare Materialien, z. B. Ethylencarbonat. Diese Materialien sind durch eine dünne Polymermembran voneinander getrennt, die einer maximalen Temperatur von 180° C standhält. Bei höheren Temperaturen als 180°C, bedingt durch eine Störung oder ein Über- bzw. Unterladen der Batterie 2, gelangen das Oxidationsmitdtel und die oxidierbaren Materialien aneinander und reagieren exotherm miteinander, so dass die Temperatur ansteigt und die Reaktion weiter antreibt als "thermal runaway". Dadurch steigt der Druck in den oder der Lithiumionen-Batterie 16 mit dem Störungszustand stark an. Ab einem bestimmten Druck, der im Allgemeinen im Bereich von 140° C erreicht wird, öffnen sich die nicht dargestellten Überdruckventile und lassen die Gase und Dämpfe in den Entgasungskanal 13 entweichen. Ferner können an den Batterien 2 auch Undichtigkeiten auftreten, so dass die Gase und Dämpfe auch in den Temperierfluidkanal 18 entweichen. Die Sensoren 7 erfassen diese Gase oder Dämpfe, z. B. Kohlenwasserstoffe, und erkennen somit eine Störung von wenigstens einer Batterie 2 des Batteriemoduls 1. Einer nicht dargestellten Steuerungseinheit wird diese Störung mitgeteilt. Eine Störung wird ab einer bestimmten Konzentration von wenigstens einem bestimmten Gas oder Dampf ausgelöst.

In dem Temperierfluidkanal 18 ist im Bereich der Einlassöffnung 4 und im Bereich der Auslassöffnung 5 je ein Verschlussmittel 8 angeordnet, welches den Temperierfluidkanal 18 fluiddicht verschließen kann. Darüber hinaus sind die beiden Entgasungskanäle 13 mit Verschlussmitteln 8 als Zusatzverschlussmittel 14, d. h. einer Klappe 9, versehen, um die Entgasungskanäle 13 fluiddicht abschließen zu können. Die Verschlussmittel 8 sind als um eine Schwenkachse 19 verschwenkbare Klappen 9 ausgebildet. Die Klappen 9 werden von einem nicht dargestellten, vorzugsweise elektrischen, Motor bewegt. In einer anderen Ausführungsform werden die Klappen 9 pyrotechnisch oder mittels eines Federmechanismus geschlossen, der z. B. elektromagnetisch ausgelöst werden kann. In Fig. 1 ist der normale Betriebszustand des Batteriemoduls 1 dargestellt. Sämtliche Klappen 9 sind geöffnet. Damit kann insbesondere die zur Temperierung der Batterien 2 notwendige Temperierluft durch den Temperierfluidkanal 18 geleitet werden und der Entgasungskanal 13 ist geöffnet, so dass dieser keinen unnötigen Beanspruchungen ausgesetzt ist.

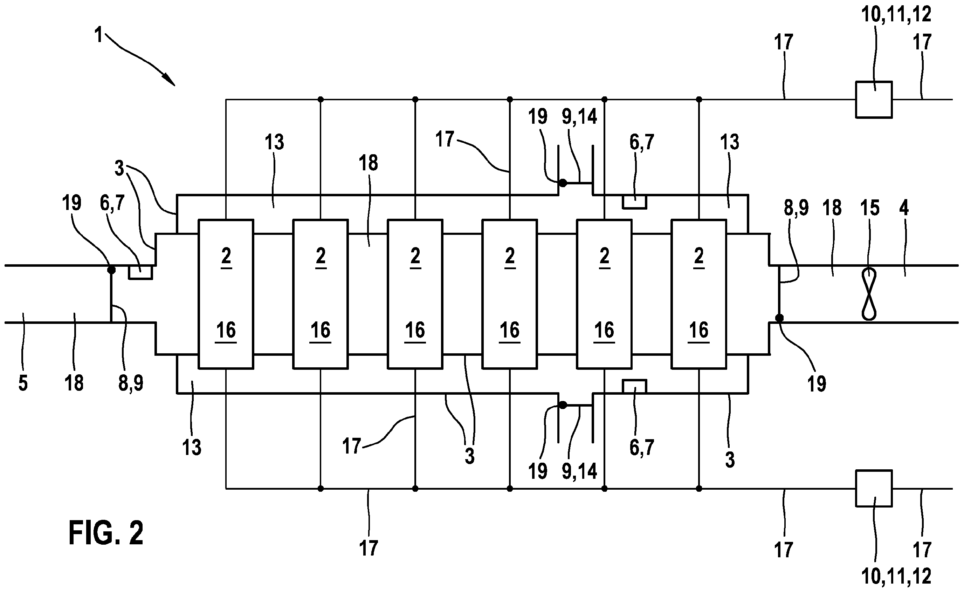

Bei einer von den Sensoren 7 erkannten Störung, wobei es ausreichend ist wenn nur ein Sensor 7 eine bestimmte Konzentration eines bestimmten Gases erfasst, werden von der Steuerungseinheit sämtliche Klappen 9 sofort geschlossen (Fig. 2). Außerdem werden vorzugsweise gleichzeitig von dem als elektronischen Schalter 12 ausgebildeten Abschaltelement 10 sämtliche Batterien 2 elektrisch abgeschaltet. Sofern das Abschaltelement 10 eine pyrotechnische Treibladung 11 beinhaltet, wird die elektrische Verbindung in einer sehr kurzen Zeit, z. B. weniger als 1 s, abgesprengt. Das Trennen der elektrischen Verbindung mit dem Abschaltelement 10 führt dazu, dass die Batterien 2 nicht mehr aufgeladen werden oder dass diesen kein elektrischer Strom mehr entnommen wird. Dadurch wird eine weitere Erwärmung der Batterien 2 aufgrund dieser Vorgänge verhindert. Das Schließen der Klappen 9 bewirkt, dass die Batterien 2 fluiddicht in dem Gehäuse 3 eingeschlossen sind. Aufgrund dieser hermetischen Abriegelung der Batterien 2 in dem Gehäuse 3 können in vorteilhafter Weise keine giftigen Gase oder Dämpfe in die Umwelt gelangen. Die in den Batterien 2 ablaufenden schädlichen chemischen Reaktionen benötigen im Allgemeinen Sauerstoff, der jedoch wegen der hermetischen Abriegelung begrenzt ist, so dass die schädlichen Reaktionen mit Sauerstoffbedarf schnell zum Erliegen kommen, weil die Menge an Luftsauerstoff in dem Gehäuse 3 sehr klein ist. Das Gehäuse 3 und das Verschlussmittel 8 des Batteriemoduls 1 sind dabei mechanisch ausreichend stabil aufgebaut, dass diese auch größeren in dem Gehäuse 3 auftretende Drücken, z. B. auch bei einer Explosion der Batterie 2, standhalten.

In einem zweiten, nicht dargestellten Ausführungsbeispiel verfügt das Batteriemodul 1 über keinen Entgasungskanal 13. Die nicht dargestellten Überdruckventile der Batterien 2 leiten Gase oder Dämpfe direkt in den Innenraum des Gehäuses 3, der auch als Temperierfluidkanal 18 dient. Dadurch werden nur die beiden Luftklappen 9 an der Ein- und Auslassöffnung 3, 4 für eine hermetische Abriegelung der Batterien 2 benötigt. Ansonsten entspricht das zweite Ausführungsbeispiel in analoge Weise dem ersten in den Fig. 1 und 2 dargestellten Ausführungsbeispiel.

In einem dritten, nicht dargestellten Ausführungsbeispiel kann von wenigstens einer Batterie 2 des Batteriemoduls 1 eine Störung mit einem lokal an der wenigstens einen Batterie 2 angeordneten Sensor 7 erkannt werden. Der Sensor 7 kann beispielsweise ein Sensor 7 zur Erfassung der Temperatur der wenigstens einen Batterie 2 sein. Die Verschlussmittel 8 sind dahingehend ausgebildet, die wenigstens eine Batterie 2, d. h. ein Teil der Batterien 2 des Batteriemoduls 1, von den anderen Batterien 2 des Batteriemoduls fluiddicht abgeschottet oder abgetrennt werden können. Auch das Abschaltelement 10 ist dahingehend ausgebildet, dass nur die wenigstens eine Batterie 2 mit der Störung elektrisch abgetrennt wird. Damit brauchen bei einer Störung von wenigstens einer Batterie 2 des Batteriemoduls 1 mit wenigstens zwei Batterien 2 nicht alle Batterien 2 des Batteriemoduls 1 abgeschaltet werden.

Die Einzelheiten der verschiedenen Ausführungsbeispiele sind miteinander kombinierbar, sofern nichts Gegenteiliges erwähnt wird.

Insgesamt betrachtet können mit dem erfindungsgemäßen Batteriemodul 1 erhebliche Verbesserungen zum Schutz und der Sicherheit von Batteriemodulen 1 verbunden. Die bei einer Störung austretenden giftigen Gase und Dämpfe werden in dem bei einer Störung hermetisch abgeschotteten Gehäuse 3 aufgefangen, so dass diese nicht in die Umwelt gelangen und dort zu Schäden verursachen können.

## Patentansprüche

1. Batteriemodul (1) umfassend
- ein Gehäuse (3),
- wenigstens eine in dem Gehäuse (3) angeordnete Batterie (2),
- wenigstens eine Einlassöffnung (4) zum Einleiten eines Temperierfluids in das Gehäuse (3),
- wenigstens eine Auslassöffnung (5) zum Ausleiten des Temperierfluids aus dem Gehäuse (3),
- wenigstens ein Überwachungsmittel (6) zur Erfassung eines Zustandes der wenigstens einen Batterie (2),
wobei die wenigstens eine Einlassöffnung (4) und/oder die wenigstens eine Auslassöffnung (5) von wenigstens einem Verschlussmittel (8) bei einem von dem wenigstens einen Überwachungsmittel (6) erfassten Störungszustand der wenigstens einen Batterie (2) verschließbar ist, so dass aus der wenigstens einen Batterie (2) mit dem Störungszustand austretende Gase nicht aus dem Batteriemodul (1) austreten können, **dadurch gekennzeichnet, dass**
das wenigstens eine Überwachungsmittel (6) einen Sensor (7) zur Erkennung von Gasen umfasst, der eingerichtet ist, ab wenigstens einer vorgegebenen Konzentration wenigstens eines vorgegebenen Gases einen Störungszustand zu erkennen.

2. Batteriemodul nach Anspruch 1,
**dadurch gekennzeichnet, dass**
das wenigstens eine Überwachungsmittel (6) wenigstens ein Sensor (7) zur Erfassung der elektrischen Spannung und/oder der Temperatur der wenigstens einen Batterie (2) umfasst.

3. Batteriemodul nach Anspruch 1,
**dadurch gekennzeichnet, dass**
der Sensor (7) innerhalb des Gehäuses (3) im Bereich der wenigstens einen Auslassöffnung (5) angeordnet ist.

4. Batteriemodul nach einem oder mehreren der vorhergehenden Ansprüche,
**dadurch gekennzeichnet, dass**
das wenigstens eine Verschlussmittel (8) eine Klappe (9) ist.

5. Batteriemodul nach einem oder mehreren der vorhergehenden Ansprüche,
**dadurch gekennzeichnet, dass**
das Batteriemodul (1) ein Abschaltelement (10) zum Trennen einer elektrischen Verbindung der wenigstens einen Batterie (2) von wenigstens einer Stromleitung (17) für die wenigstens eine Batterie (2) bei einem von dem wenigstens einen Überwachungsmittel (6) erfassten Störungszustand der wenigstens einen Batterie (2) umfasst.

6. Batteriemodul nach Anspruch 5,
**dadurch gekennzeichnet, dass**
das Abschaltelement (10) eine pyrotechnische Treibladung (11) umfasst.

7. Batteriemodul nach Anspruch 5 oder 6,
**dadurch gekennzeichnet, dass**
das Abschaltelement (10) einen mechanischen, elektrischen oder elektronischen Schalter (12) umfasst.

8. Batteriemodul nach einem oder mehreren der vorhergehenden Ansprüche,
**dadurch gekennzeichnet, dass**
das Batteriemodul (1) wenigstens einen Entgasungskanal (13) zum Ableiten von aus der wenigstens einen Batterie (2) austretenden Stoffen, insbesondere Gase, mit einem Überwachungsmittel (6) in dem Entgasungskanal (13) umfasst und der Entgasungskanal (13) von wenigstens einem Zusatzverschlussmittel (14) bei einem Störungszustand der wenigstens einen Batterie (2) verschließbar ist, so dass aus der wenigstens einen Batterie (2) mit dem Störungszustand austretenden Stoffe, insbesondere Gase, nicht aus dem Batteriemodul (1) austreten können.

9. Batteriemodul nach einem oder mehreren der vorhergehenden Ansprüche,
**dadurch gekennzeichnet, dass**
von einem Gebläse (15) das Temperierfluid durch den Innenraum des Gehäuses (3) leitbar ist.

10. Batteriemodul nach einem oder mehreren der vorhergehenden Ansprüche,
**dadurch gekennzeichnet, dass**
die Batterie (2) eine Lithiumionen-Batterie (16) ist.

11. Batteriemodulsystem (20) mit mehreren Batteriemodulen (1),
**dadurch gekennzeichnet, dass**
das Batteriemodulsystem (20) wenigstens ein Batteriemodul (1) gemäß einem oder mehrerer der vorhergehenden Ansprüche umfasst.

12. Verfahren zur Verhinderung von Schäden, die von wenigstens einer in einem Gehäuse (3) eines Batteriemoduls (1) angeordneten Batterie (2) verursacht werden und wobei der Zustand der wenigstens einen Batterie (2) von einem Überwachungsmittel (6) erfasst wird,
**dadurch gekennzeichnet, dass**
bei einem von dem wenigstens einen Überwachungsmittel (6) erfassten Störungszustand der wenigstens einen Batterie (2) die wenigstens eine Batterie (2) fluiddicht in dem Gehäuse (3) eingeschlossen wird, wobei das wenigstens eine Überwachungsmittel (6) einen Sensor (7) zur Erkennung von Gasen umfasst, der ab wenigstens einer vorgegebenen Konzentration wenigstens eines vorgegebenen Gases einen Störungszustand erkennt.

13. Verfahren nach Anspruch 12,
**dadurch gekennzeichnet, dass**
wenigstens eine Einlassöffnung (4) zum Einleiten eines Temperierfluids in den Innenraum des Gehäuse (3) und wenigstens eine Auslassöffnung (5) zum Ausleiten des Temperierfluids aus dem Innenraum des Gehäuses (3) und vorzugsweise wenigstens ein Entgasungskanal (13) von wenigstens einem Verschlussmittel (8), z. B. einer Klappe (9), fluiddicht verschlossen werden.

14. Verfahren nach Anspruch 12 oder 13,
**dadurch gekennzeichnet, dass**
bei einem von dem wenigstens einen Überwachungsmittel (6) erfassten Störungszustand der wenigstens einen Batterie (2) die wenigstens eine Batterie (2) von wenigstens einer Stromleitung (17) zum Auf- und Entladen der wenigstens einen Batterie (2) abgetrennt wird.

## Claims

1. Battery module (1) comprising
- a housing (3),
- at least one battery (2) arranged in the housing (3),
- at least one inlet opening (4) for introducing a temperature-control fluid into the housing (3),
- at least one outlet opening (5) for discharging the temperature-control fluid from the housing (3),
- at least one monitoring means (6) for detecting a state of the at least one battery (2),
wherein the at least one inlet opening (4) and/or the at least one outlet opening (5) can be closed by at least one closure means (8) in the case of a fault state of the at least one battery (2) being detected by the at least one monitoring means (6), with the result that gases leaking from the at least one battery (2) having the fault state cannot leak from the battery module (1), **characterized in that**
the at least one monitoring means (6) comprises a sensor (7) for identifying gases, said sensor being configured to identify a fault state starting from at least one prescribed concentration of at least one prescribed gas.

2. Battery module according to Claim 1, **characterized in that** the at least one monitoring means (6) comprises at least one sensor (7) for detecting the electrical voltage and/or the temperature of the at least one battery (2).

3. Battery module according to Claim 1, **characterized in that** the sensor (7) is arranged within the housing (3) in the region of the at least one outlet opening (5) .

4. Battery module according to one or more of the preceding claims, **characterized in that** the at least one closure means (8) is a flap (9).

5. Battery module according to one or more of the preceding claims, **characterized in that** the battery module (1) comprises a disconnection element (10) for isolating an electrical connection of the at least one battery (2) from at least one power line (17) for the at least one battery (2) in the case of a fault state of the at least one battery (2) being detected by the at least one monitoring means (6).

6. Battery module according to Claim 5, **characterized in that** the disconnection element (10) comprises a pyrotechnic propellant (11).

7. Battery module according to Claim 5 or 6, **characterized in that** the disconnection element (10) comprises a mechanical, electrical or electronic switch (12) .

8. Battery module according to one or more of the preceding claims, **characterized in that** the battery module (1) comprises at least one degassing channel (13) for diverting substances, in particular gases, leaking from the at least one battery (2) having a monitoring means (6) in the degassing channel (13) and the degassing channel (13) can be closed by at least one additional closure means (14) in the case of a fault state of the at least one battery (2), with the result that substances, in particular gases, leaking from the at least one battery (2) having the fault state cannot leak from the battery module (1).

9. Battery module according to one or more of the preceding claims, **characterized in that** the temperature-control fluid can be channelled through the interior of the housing (3) by a fan (15).

10. Battery module according to one or more of the preceding claims, **characterized in that** the battery (2) is a lithium-ion battery (16).

11. Battery module system (20) having a plurality of battery modules (1), **characterized in that** the battery module system (20) comprises at least one battery module (1) according to one or more of the preceding claims.

12. Method for preventing damage caused by at least one battery (2) arranged in a housing (3) of a battery module (1) and wherein the state of the at least one battery (2) is detected by a monitoring means (6), **characterized in that**, in the case of a fault state of the at least one battery (2) being detected by the at least one monitoring means (6), the at least one battery (2) is enclosed in the housing (3) in a fluid-tight manner, wherein the at least one monitoring means (6) comprises a sensor (7) for identifying gases, said sensor identifying a fault state starting from at least one prescribed concentration of at least one prescribed gas.

13. Method according to Claim 12, **characterized in that** at least one inlet opening (4) for introducing a temperature-control fluid into the interior of the housing (3) and at least one outlet opening (5) for discharging the temperature-control fluid from the interior of the housing (3) and preferably at least one degassing channel (13) are closed by at least one closure means (8), for example a flap (9), in a fluid-tight manner.

14. Method according to Claim 12 or 13, **characterized in that**, in the case of a fault state of the at least one battery (2) being detected by the at least one monitoring means (6), the at least one battery (2) is separated from at least one power line (17) for charging and discharging the at least one battery (2).

## Revendications

1. Module de batterie (1) comprenant
- un boîtier (3),
- au moins une batterie (2) disposée dans le boîtier (3),
- au moins une ouverture d'entrée (4) servant à l'introduction d'un fluide de régulation de la température dans le boîtier (3),
- au moins une ouverture de sortie (5) destinée à l'évacuation du fluide de régulation de la température hors du boîtier (3),
- au moins un moyen de surveillance (6) destiné à détecter un état de l'au moins une batterie (2),
l'au moins une ouverture d'entrée (4) et/ou l'au moins une ouverture de sortie (5) pouvant être fermées par au moins un moyen de fermeture (8) dans le cas d'une situation de défaut de l'au moins une batterie (2) détectée par l'au moins un moyen de surveillance (6), de sorte que les gaz qui sortent de l'au moins une batterie (2) en situation de défaut ne puissent pas sortir du module de batterie (1), **caractérisé en ce que** l'au moins un moyen de surveillance (6) comprend un capteur (7) destiné à détecter des gaz, lequel est conçu pour détecter une situation de défaut à partir d'au moins une concentration prédéfinie d'au moins un gaz prédéfini.

2. Module de batterie selon la revendication 1, **caractérisé en ce que** l'au moins un moyen de surveillance (6) comprend au moins un capteur (7) destiné à détecter la tension électrique et/ou la température de l'au moins une batterie (2).

3. Module de batterie selon la revendication 1, **caractérisé en ce que** le capteur (7) est disposé à l'intérieur du boîtier (3) dans la zone de l'au moins une ouverture de sortie (5).

4. Module de batterie selon une ou plusieurs des revendications précédentes, **caractérisé en ce que** l'au moins un moyen de fermeture (8) est un clapet (9).

5. Module de batterie selon une ou plusieurs des revendications précédentes, **caractérisé en ce que** le module de batterie (1) comprend un élément de déconnexion (10) destiné à couper une liaison électrique de l'au moins une batterie (2) à au moins une ligne électrique (17) pour l'au moins une batterie (2) dans le cas d'une situation de défaut de l'au moins une batterie (2) détectée par l'au moins un moyen de surveillance (6).

6. Module de batterie selon la revendication 5, **caractérisé en ce que** l'élément de déconnexion (10) comprend une charge propulsive pyrotechnique (11).

7. Module de batterie selon la revendication 5 ou 6, **caractérisé en ce que** l'élément de déconnexion (10) comprend un commutateur (12) mécanique, électrique ou électronique.

8. Module de batterie selon une ou plusieurs des revendications précédentes, **caractérisé en ce que** le module de batterie (1) comprend au moins un canal de dégazage (13) destiné à l'évacuation de substances, notamment de gaz, qui sortent de l'au moins une batterie (2), avec un moyen de surveillance (6) dans le canal de dégazage (13), et le canal de dégazage (13) pouvant être fermé par au moins un moyen de fermeture supplémentaire (14) en présence d'une situation de défaut de l'au moins une batterie (2), de sorte que les substances, notamment les gaz, qui sortent de l'au moins une batterie (2) en situation de défaut ne puissent pas sortir du module de batterie (1).

9. Module de batterie selon une ou plusieurs des revendications précédentes, **caractérisé en ce que** le fluide de régulation de la température peut être introduit dans l'espace intérieur du boîtier (3) par une soufflerie (15).

10. Module de batterie selon une ou plusieurs des revendications précédentes, **caractérisé en ce que** la batterie (2) est une batterie au lithium (16).

11. Système de modules de batterie (20) comprenant plusieurs modules de batterie (1), **caractérisé en ce que** le système de modules de batterie (20) comporte au moins un module de batterie (1) selon une ou plusieurs des revendications précédentes.

12. Procédé de prévention de dommages qui sont causés par au moins une batterie (2) disposée dans un boîtier (3) d'un module de batterie (1) et l'état de l'au moins une batterie (2) étant détecté par un moyen de surveillance (6),
**caractérisé en ce que**
dans le cas d'une situation de défaut de l'au moins une batterie (2) détectée par l'au moins un moyen de surveillance (6), l'au moins une batterie (2) est enfermée dans le boîtier (3) de manière étanche aux fluides, l'au moins un moyen de surveillance (6) comprenant un capteur (7) destiné à détecter des gaz, lequel détecte une situation de défaut à partir d'au moins une concentration prédéfinie d'au moins un gaz prédéfini.

13. Procédé selon la revendication 12, **caractérisé en ce qu'**au moins une ouverture d'entrée (4) servant à l'introduction d'un fluide de régulation de la température dans l'espace intérieur du boîtier (3) et au moins une ouverture de sortie (5) destinée à l'évacuation du fluide de régulation de la température hors de l'espace intérieur du boîtier (3) et de préférence au moins un canal de dégazage (13) sont fermés de manière étanche aux fluides par au moins un moyen de fermeture (8), par exemple un clapet (9).

14. Procédé selon la revendication 12 ou 13, **caractérisé en ce que** dans le cas d'une situation de défaut de l'au moins une batterie (2) détectée par l'au moins un moyen de surveillance (6) l'au moins une batterie (2) est déconnectée d'au moins une ligne électrique (17) servant à la charge et à la décharge de l'au moins une batterie (2).
